# EUROPÄISCHE PATENTANMELDUNG

(11) **EP 2 878 243 A1**
(43) Veröffentlichungstag der Anmeldung: **03.06.2015**
(21) Anmeldenummer: 13194707.9
(22) Anmeldetag: 27.11.2013
(51) Int. Cl.: A47J 37/07

(54) **Grillvorrichtung**

(71) Anmelder: Tanner, Marcel, 8700 Küsnacht (CH); Denneberg, Reto, 8044 Zürich (CH)
(72) Erfinder: Tanner, Marcel, 8700 Küsnacht (CH)
(74) Vertreter: Daub, Thomas

(57) **Zusammenfassung**

Die Erfindung geht aus von einer Grillvorrichtung, insbesondere von einer Holz- und/oder Holzkohlegrillvorrichtung, zu einer Zubereitung von Grillgut (12), mit zumindest einem verschließbaren Garraum (14), mit zumindest einer zumindest teilweise im Garraum (14) anordenbaren Wärmequelleneinheit (16) zu einer Wärmezufuhr und mit zumindest einer zumindest teilweise im Garraum (14) anordenbaren Grillgutaufnahmeeinheit (18) zu einer Aufnahme von Grillgut (12).

Es wird vorgeschlagen, dass die Grillgutaufnahmeeinheit (18) die Wärmequelleneinheit (16) zu einer zumindest seitlichen Wärmebeaufschlagung des an der Grillgutaufnahmeeinheit (18) anordenbaren Grillguts (12) durch die Wärmequelleneinheit (16) zumindest teilweise umgibt.

## Beschreibung

### Stand der Technik

Die Erfindung betrifft eine Grillvorrichtung, insbesondere eine Holz- und/oder Holzkohlegrillvorrichtung, nach dem Oberbegriff des Anspruchs 1.

Aus US 5,070,777 A ist bereits eine Grillvorrichtung, insbesondere eine Holz- und/oder Holzkohlegrillvorrichtung, zu einer Zubereitung von Grillgut bekannt, die einen verschließbaren Garraum, eine im Garraum anordenbare Wärmequelleneinheit zu einer Wärmezufuhr und eine im Garraum anordenbare Grillgutaufnahmeeinheit zu einer Aufnahme von Grillgut aufweist. Die Grillgutaufnahmeeinheit ist hierbei an einer einer Fettauffangschale der Grillvorrichtung abgewandten Seite der Wärmequelleneinheit angeordnet.

Die Aufgabe der Erfindung besteht insbesondere darin, eine gattungsgemäße Vorrichtung mit verbesserten Eigenschaften hinsichtlich eines Garergebnisses bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Grillvorrichtung, insbesondere von einer Holz- und/oder Holzkohlegrillvorrichtung, zu einer Zubereitung von Grillgut, mit zumindest einem verschließbaren Garraum, mit zumindest einer zumindest teilweise im Garraum anordenbaren Wärmequelleneinheit und mit zumindest einer zumindest teilweise im Garraum anordenbaren Grillgutaufnahmeeinheit zu einer Aufnahme von Grillgut.

Es wird vorgeschlagen, dass die Grillgutaufnahmeeinheit die Wärmequelleneinheit zu einer zumindest seitlichen Wärmebeaufschlagung des an der Grillgutaufnahmeeinheit anordenbaren Grillguts durch die Wärmequelleneinheit zumindest teilweise umgibt. Bevorzugt erfolgt hierbei eine Wärmeübertragung von der Wärmequelleneinheit auf das an der Grillgutaufnahmeeinheit anordenbare Grillgut mittels Konvektion oder mittels Wärmestrahlung. Hierbei weist die Wärmequelleneinheit bevorzugt eine zumindest im Wesentlichen quer, insbesondere zumindest im Wesentlichen senkrecht, zu einer Vertikalachse der Grillvorrichtung verlaufende Hauptwärmezufuhrrichtung auf, entlang der eine Wärmeübertragung an den Garraum, insbesondere auf das an der Grillgutaufnahmeeinheit anordenbare Grillgut, erfolgt. Hierzu umfasst die Wärmequelleneinheit zumindest eine Wärmezufuhröffnung, die entlang einer zumindest im Wesentlichen quer, insbesondere zumindest im Wesentlichen senkrecht, zur Vertikalachse der Grillvorrichtung verlaufenden Richtung ausgerichtet ist. Die Vertikalachse der Grillvorrichtung erstreckt sich vorzugsweise zumindest im Wesentlichen senkrecht zu einer Untergrundstandfläche der Grillvorrichtung. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Besonders bevorzugt erstreckt sich die Wärmequelleneinheit, betrachtet entlang einer zumindest im Wesentlichen parallel zur Vertikalachse der Grillvorrichtung verlaufenden Richtung, zumindest ausgehend von der Grillgutaufnahmeeinheit auf einer der Untergrundstandfläche der Grillvorrichtung abgewandten Seite der Grillgutaufnahmeeinheit über die Grillgutaufnahmeeinheit, insbesondere über zumindest ein Grillgutaufnahmeelement der Grillgutaufnahmeeinheit, hinweg. Besonders bevorzugt erstreckt sich die Grillgutaufnahmeeinheit, betrachtet in einer sich zumindest im Wesentlichen parallel zur Untergrundstandfläche erstreckenden Ebene, im Bereich der Wärmezufuhröffnung der Wärmequelleneinheit, insbesondere in einem Wärmeausströmbereich der Wärmezufuhröffnung, zumindest teilweise um die Wärmequelleneinheit. Das Grillgut ist somit vorzugsweise um die Wärmequelleneinheit an der Wärmezufuhröffnung anordenbar. Es ist jedoch auch denkbar, dass sich die Grillgutaufnahmeeinheit, betrachtet in einer sich zumindest im Wesentlichen senkrecht zur Untergrundstandfläche erstreckenden Ebene, im Bereich der Wärmezufuhröffnung der Wärmequelleneinheit zumindest teilweise um die Wärmequelleneinheit erstreckt.

Die Wärmequelleneinheit weist bevorzugt zumindest ein Wärmequellenaufnahmeelement auf, das zu einer Aufnahme von zumindest einem Wärmequellenelement vorgesehen ist. Das Wärmequellenelement kann hierbei als Festkörperwärmequellenelement, wie beispielsweise Holz, Holzkohle usw., als Fluidwärmequellenelement, wie beispielsweise als Brennpaste, als Brennspiritus, als Gas usw., oder als elektrisches Wärmequellenelement ausgebildet sein. Besonders bevorzugt ist das Wärmequellenelement als Holz- oder als Holzkohleelement ausgebildet. Somit ist das Wärmequellenaufnahmeelement vorzugsweise zu einer Aufnahme von zumindest einem als Holz- oder als Holzkohleelement ausgebildeten Wärmequellenelement vorgesehen. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs-und/oder Betriebszustand erfüllt und/oder ausführt.

Die Wärmequelleneinheit kann zusätzlich zum Wärmequellenaufnahmeelement zumindest ein Wärmeleitelement zu einer gezielten Leitung von Wärme aufweisen. Hierbei ist das Wärmeleitelement bevorzugt dazu vorgesehen, einen von der Wärmequelleneinheit erzeugten Wärmestrom gezielt zu leiten, wie beispielsweise mittels Konvektion oder mittels Wärmestrahlung. Somit ist eine mittels der Wärmequelleneinheit erzeugbare Wärme vorteilhaft mittels Konvektion oder mittels Wärmestrahlung an den Garraum übertragbar. Das Wärmeleitelement erstreckt sich hierbei vorzugsweise in den Garraum hinein. Das Wärmeleitelement kann hierbei in zumindest einer Ausgestaltung der Wärmequelleneinheit einteilig mit dem Wärmequellenaufnahmeelement ausgebildet sein Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Andere, einem Fachmann als sinnvoll erscheinende Ausgestaltungen der Wärmequelleneinheit sind ebenfalls denkbar. Mittels der erfindungsgemäßen Ausgestaltung der Grillvorrichtung kann ein vorteilhaftes Garergebnis erzielt werden. Es kann vorteilhaft eine entlang einer zumindest im Wesentlichen quer zur Vertikalachse der Grillvorrichtung verlaufenden Richtung ausgerichtete Hauptwärmebeaufschlagung von auf der Grillgutaufnahmeeinheit anordenbarem Grillgut erfolgen. Somit kann vorteilhaft eine besonders wirkungsvolle indirekte Erhitzung von Grillgut ermöglicht werden. Es kann vorteilhaft eine nährstoffschonende Garung von Grillgut erreicht werden. Zudem kann vorteilhaft ein Garen von Grillgut ermöglicht werden, bei dem Fett des Grillguts nicht in die Wärmequelleneinheit tropfen kann.

Des Weiteren wird vorgeschlagen, dass sich die Wärmequelleneinheit zumindest in einem an der Wärmequelleneinheit angeordneten Zustand der Grillgutaufnahmeeinheit entlang zumindest zwei entgegengesetzt gerichteten Richtungen über die Grillgutaufnahmeeinheit hinweg erstreckt. Besonders bevorzugt erstreckt sich die Wärmequelleneinheit zumindest in einem an der Wärmequelleneinheit angeordneten Zustand der Grillgutaufnahmeeinheit entlang zumindest zwei entgegengesetzt gerichteten Richtungen, die im Wesentlichen parallel zur Längsachse der Wärmequelleneinheit verlaufen, über die Grillgutaufnahmeeinheit hinweg. Besonders bevorzugt verläuft die Längsachse der Wärmequelleneinheit zumindest im Wesentlichen parallel zur Vertikalachse der Grillvorrichtung. Mittels der erfindungsgemäßen Ausgestaltung kann somit eine vorteilhafte Wärmezufuhr zu einem Garen von Grillgut erreicht werden.

Ferner wird vorgeschlagen, dass die Wärmequelleneinheit eine maximale Längserstreckung aufweist, die größer ist als 30 % einer maximalen Längserstreckung des Garraums. Insbesondere weist die Wärmequelleneinheit eine maximale Längserstreckung auf, die größer ist als 50 % der maximalen Längserstreckung des Garraums, bevorzugt größer ist als 60 % der maximalen Längserstreckung des Garraums und besonders bevorzugt größer ist als 70 % der maximalen Längserstreckung des Garraums. Die maximale Längserstreckung der Wärmequelleneinheit erstreckt sich hierbei vorzugsweise zumindest im Wesentlichen parallel zur Längsachse der Wärmequelleneinheit. Die maximale Längserstreckung des Garraums erstreckt sich bevorzugt zumindest im Wesentlichen parallel zur Vertikalachse der Grillvorrichtung. Mittels der erfindungsgemäßen Ausgestaltung kann eine vorteilhafte Wärmezufuhr ermöglicht werden. Somit kann eine vorteilhafte Erwärmung des Garraums erreicht werden.

Zudem wird vorgeschlagen, dass sich die Wärmequelleneinheit zum Großteil durch den Garraum erstreckt. Unter dem Ausdruck "zum Großteil durch den Garraum erstreckt" soll hier insbesondere definieren, dass sich zumindest mehr als 50 % einer maximalen Längserstreckung der Wärmequelleneinheit durch den Garraum und/oder in den Garraum hinein erstrecken. Besonders bevorzugt erstreckt sich die Wärmequelleneinheit, betrachtet entlang einer zumindest im Wesentlichen parallel zur Vertikalachse verlaufenden Richtung zum Großteil durch den Garraum. Mittels der erfindungsgemäßen Ausgestaltung kann vorteilhaft eine große Oberfläche der Wärmequelleneinheit zu einer Wärmezufuhr bereitgestellt werden. Somit kann vorteilhaft ein schnelles Aufheizen des Garraums ermöglicht werden.

Des Weiteren wird vorgeschlagen, dass sich die Wärmequelleneinheit vollständig durch den Garraum erstreckt. Somit ist die maximale Längserstreckung der Wärmequelleneinheit zumindest gleich der maximalen Längserstreckung des Garraums oder größer als die maximale Längserstreckung des Garraums. Hierbei ist es auch denkbar, dass im Garraum ein Vakuum erzeugbar ist bzw. der Garraum luftdicht verschließbar ist und infolge eines vollständigen Hindurcherstreckens der Wärmequelleneinheit durch den Garraum eine Erwärmung des Garraums und/oder des im Garraum angeordneten Grillguts ermöglicht werden kann, wobei eine Sauerstoffzufuhr für die Wärmequelleneinheit sichergestellt werden kann. Weitere, einem Fachmann als sinnvoll erscheinende Ausgestaltungen sind ebenfalls denkbar. Mittels der erfindungsgemäßen Ausgestaltung kann eine vorteilhafte Erwärmung des Garraums ermöglicht werden. Der Garraum kann infolge der Erstreckung der Wärmequelleneinheit durch den Garraum vorteilhaft entlang seiner gesamten Längserstreckung zumindest im Wesentlichen gleichmäßig erwärmt werden.

Ferner wird vorgeschlagen, dass die Grillvorrichtung zumindest eine Brenngasabzugseinheit umfasst, die zumindest teilweise einteilig mit der Wärmequelleneinheit ausgebildet ist. Die Brenngasabzugseinheit ist vorzugsweise als Kamineinheit ausgebildet. Hierbei ist zumindest ein Element der Brenngasabzugseinheit bevorzugt zumindest teilweise einteilig mit dem Wärmequellenaufnahmeelement ausgebildet. Somit kann ein vorteilhafter Abzug von Brenngas ermöglicht werden. Zudem kann eine vorteilhafte Sauerstoffzufuhr zu einer Verbrennung von im Wärmequellenaufnahmeelement angeordneten Wärmequellenelementen erreicht werden. Des Weiteren kann somit vorteilhaft erreicht werden, dass Grillgut zumindest im Wesentlichen außerhalb eines durch eine Verbrennung von Wärmequellenelementen erzeugten Brenngases gegart wird. Das Brenngas kann vorteilhaft mittels der Brenngasabzugseinheit aus dem Garraum abgeführt werden.

Zudem wird vorgeschlagen, dass die Grillvorrichtung zumindest eine Lagereinheit zu einer beweglichen Lagerung der Grillgutaufnahmeeinheit relativ zur Wärmequelleneinheit umfasst. Die Lagereinheit kann hierbei zu einer translatorischen und/oder zu einer rotatorischen Lagerung der Grillgutaufnahmeeinheit vorgesehen sein. Vorzugsweise erstreckt sich die Lagereinheit um die Wärmequelleneinheit herum, insbesondere betrachtet in einer zumindest im Wesentlichen parallel zur Untergrundstandfläche der Grillvorrichtung verlaufenden Ebene. Es ist jedoch auch denkbar, dass die Lagereinheit an der Wärmequelleneinheit angeordnet ist und sich entlang einer zumindest im Wesentlichen parallel zur Längsachse der Wärmequelleneinheit verlaufenden Richtung erstreckt. Mittels der erfindungsgemäßen Ausgestaltung kann vorteilhaft eine komfortable Einstellung einer Position der Grillgutaufnahmeeinheit relativ zur Wärmequelleneinheit ermöglicht werden. Zudem kann vorteilhaft ein komfortabler Zugriff eines Grillvorrichtungsbedieners auf ein an der Grillgutaufnahmeeinheit angeordneten Grillguts realisiert werden, da die Grillgutaufnahmeeinheit in eine gewünschte Position bewegbar ist.

Besonders vorteilhafterweise ist die Grillgutaufnahmeeinheit mittels der Lagereinheit drehbar relativ zur Wärmequelleneinheit lagerbar. Bevorzugt ist die Grillgutaufnahmeeinheit mittels der Lagereinheit entlang eines Winkelbereichs von zumindest 360° drehbar gelagert. Es ist jedoch auch denkbar, dass die Grillgutaufnahmeeinheit mittels der Lagereinheit um einen Winkelberiech kleiner als 360° drehbar relativ zur Wärmequelleneinheit lagerbar ist. Mittels der erfindungsgemäßen Ausgestaltung kann vorteilhaft eine komfortable Positionierung von Grillgut an der Grillgutaufnahmeeinheit ermöglicht werden. Ein Grillvorrichtungsbediener kann vorteilhaft zu einer Anordnung von Grillgut an der Grillgutaufnahmeeinheit seine Position beibehalten und die Grillgutaufnahmeeinheit mit Grillgut bestücken. Es kann somit eine komfortable Anordnung und Verteilung von Grillgut an der Grillgutaufnahmeeinheit erreicht werden.

Des Weiteren wird vorgeschlagen, dass die Grillgutaufnahmeeinheit zumindest ein Grillgutaufnahmeelement und zumindest ein weiteres Grillgutaufnahmeelement aufweist, die übereinander an der Wärmequelleneinheit anordenbar sind. Besonders bevorzugt sind das Grillgutaufnahmeelement und das weitere Grillgutaufnahmeelement entlang der Längsachse der Wärmequelleneinheit relativ zueinander beabstandet übereinander an der Wärmequelleneinheit anordenbar. Mittels der erfindungsgemäßen Ausgestaltung kann vorteilhaft ein eine große Grillgutaufnahmefläche zur Verfügung gestellt werden. Zudem können vorteilhaft unterschiedliche Wärmezonen innerhalb des Garraums realisiert werden. Somit kann je nach Art des Grillguts eine für das Grillgut vorteilhafte Anordnung an dem Grillgutaufnahmeelement oder an dem weiteren Grillgutaufnahmeelement ermöglicht werden.

Ferner wird vorgeschlagen, dass die Grillvorrichtung zumindest eine Anheizeinheit zu einem Anheizen und/oder Anzünden von zumindest einem in der Wärmequelleneinheit anordenbaren Wärmequellenelement umfasst. Die Anheizeinheit kann hierbei als Fluidanheizeinheit, wie beispielsweise als Brennpastenanheizeinheit, als Gasanheizeinheit, als Brennspiritusanheizeinheit usw., oder als Feststoffanheizeinheit, wie beispielsweise als Holzanheizeinheit oder als Holzkohleanheizeinheit usw., ausgebildet sein. Zu einem Anheizen und/oder Anzünden von zumindest einem in der Wärmequelleneinheit anordenbarem Wärmequellenelement ist vorzugsweise zumindest ein Feststoffanheizelement, insbesondere Holz oder Holzkohle, in der Anheizeinheit anordenbar, das mittels einer Feuerquelle anzündbar ist. Nachdem das Feststoffanheizelement angezündet ist, wird die Anheizeinheit an der Wärmequelleneinheit angeordnet, um das in der Wärmequelleneinheit angeordnete Wärmequellenelement zu entzünden bzw. anzuzünden. Es ist jedoch auch denkbar, dass die Anheizeinheit zumindest ein Brennerelement, insbesondere ein Brennerelement, wie beispielsweise ein Gasbrennerelement, umfasst, das zu einer Entzündung des in der Wärmequelleneinheit anordenbaren Wärmequellenelements vorgesehen ist. Mittels der erfindungsgemäßen Ausgestaltung kann ein komfortables und ein sicheres Anheizen und/oder Anzünden von zumindest einem in der Wärmequelleneinheit angeordneten Wärmequellenelement erreicht werden.

Zudem wird vorgeschlagen, dass die Anheizeinheit zumindest ein Anheizelement umfasst, das lösbar an der Wärmequelleneinheit anordenbar ist. Besonders bevorzugt ist das Anheizelement dazu vorgesehen, zumindest ein Feststoffanheizelement, insbesondere Holz oder Holzkohle, aufzunehmen. In einem im Anheizelement angeordneten Zustand des Feststoffanheizelements, insbesondere des Holzes oder der Holzkohle, ist das Feststoffanheizelement mittels einer Feuerquelle, wie beispielsweise ein Brennerelement, ein Feuerzeug, ein Streichholz usw., anzündbar. Nach einem Anzünden ist das Anheizelement zu einem Anheizen und/oder Anzünden von zumindest einem in der Wärmequelleneinheit angeordneten Wärmequellenelement an der Wärmequelleneinheit anordenbar. Mittels der erfindungsgemäßen Ausgestaltung der Grillvorrichtung kann vorteilhaft ein bequemes Anzünden ermöglicht werden, bei dem eine geringe Verbrennungsgefahr für einen Grillvorrichtungsbediener besteht.

Des Weiteren wird vorgeschlagen, dass das Anheizelement zumindest teilweise zu einem Auffangen von Wärmequellenelementrückstanden vorgesehen ist. Bevorzugt ist das Anheizelement somit teilweise als Auffangbehälter ausgebildet. Hierzu umfasst das Anheizelement bevorzugt zumindest eine vollständig geöffnete Seite und eine zumindest teilweise geöffnete weitere Seite, die der vollständig geöffneten Seite abgewandt ist. Die teilweise geöffnete weitere Seite ist vorzugsweise gitterartig ausgebildet. Mittels der erfindungsgemäßen Ausgestaltung kann konstruktiv einfach ein Auffangen von Wärmequellenelementrückstanden nach einer Verbrennung ermöglicht werden.

Ferner wird vorgeschlagen, dass die Grillvorrichtung zumindest ein beweglich gelagertes Garraumverschlusselement zu einem Öffnen und/oder Schließen des Garraums umfasst.

Das Garraumverschlusselement weist hierbei vorzugsweise eine maximale Längserstreckung auf, die zumindest 30 % einer maximalen Längserstreckung des Garraums entspricht. Insbesondere weist das Garraumverschlusselement eine maximale Längserstreckung auf, die größer ist als 50 % der maximalen Längserstreckung des Garraums, bevorzugt größer ist als 70 % der maximalen Längserstreckung des Garraums und besonders bevorzugt größer ist als 90 % der maximalen Längserstreckung des Garraums. Mittels der erfindungsgemäßen Ausgestaltung kann vorteilhaft ein komfortabler Zugang zum Garraum geschaffen werden. Zudem kann vorteilhaft eine konstruktiv einfache Temperaturregulierung und/oder Rauchregulierung infolge eines Öffnen und/oder eines Schließens des Garraumverschlusselements ermöglicht werden.

Vorteilhafterweise ist das Garraumverschlusselement schwenkbar gelagert. Eine Schwenkachse des Garraumverschlusselements verläuft vorzugsweise zumindest im Wesentlichen parallel zur Längsachse der Wärmequelleneinheit. Somit ist das Garraumverschlusselement als Garraumtüre ausgebildet. Es ist jedoch auch denkbar, dass das Garraumverschlusselement eine andere, einem Fachmann als sinnvoll erscheinende Ausgestaltung aufweist. Mittels der erfindungsgemäßen Ausgestaltung kann vorteilhaft ein einfach zu bedienendes Garraumverschlusselement realisiert werden.

Die erfindungsgemäße Grillvorrichtung soll hierbei nicht auf die oben beschriebene Anwendung und Ausführungsform beschränkt sein. Insbesondere kann die erfindungsgemäße Grillvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Grillvorrichtung in einer schematischen Darstellung,
- Fig. 2: eine Seitenansicht der erfindungsgemäßen Grillvorrichtung in einer schematischen Darstellung,
- Fig. 3: eine Detailansicht einer Wärmequelleneinheit der erfindungsgemäßen Grillvorrichtung in einer schematischen Darstellung,
- Fig. 4: eine Detailansicht einer Grillgutaufnahmeeinheit der erfindungsgemäßen Grillvorrichtung in einer schematischen Darstellung,
- Fig. 5: eine Detailansicht eines Anheizelements einer Anheizeinheit der erfindungsgemäßen Grillvorrichtung in einer schematischen Darstellung und
- Fig. 6: eine weitere Detailansicht des Anheizelements in einer schematischen Darstellung.

### Beschreibung des Ausführungsbeispiels

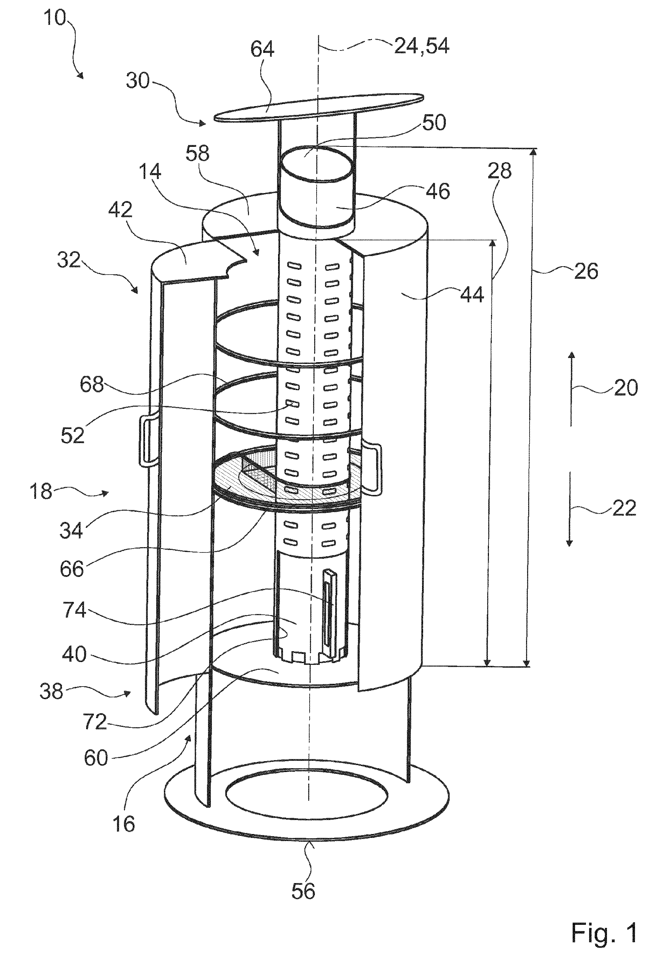

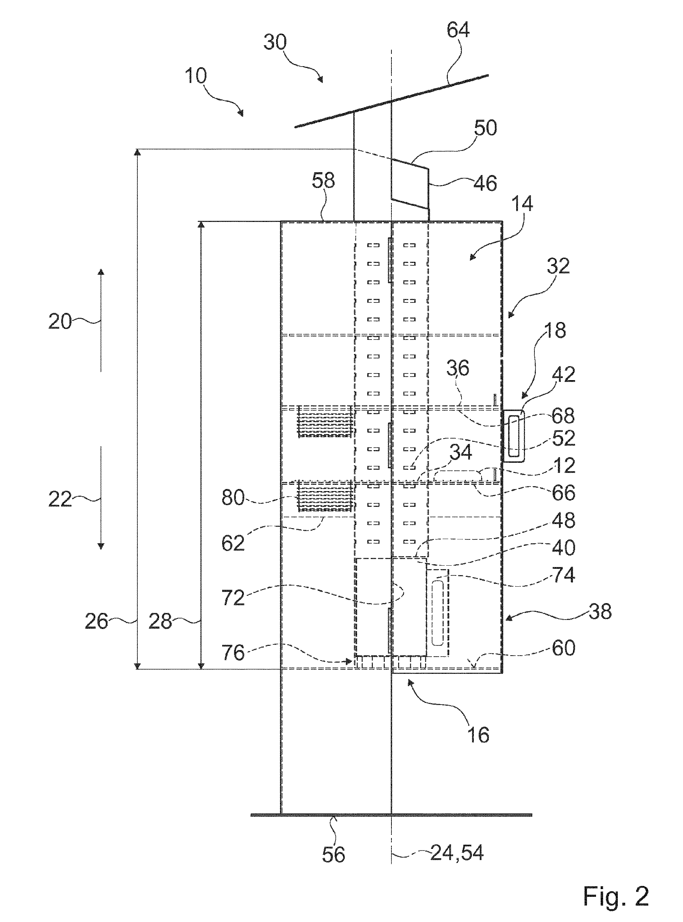

Figur 1 zeigt eine Grillvorrichtung 10 zu einer Zubereitung von Grillgut 12 (Figur 2), die als Holz- und/oder Holzkohlegrillvorrichtung ausgebildet ist. Somit ist die Grillvorrichtung 10 mittels zumindest eines als Holz und/oder als Holzkohle ausgebildeten Wärmequellenelements (hier nicht näher dargestellt) beheizbar und/oder befeuerbar. Es ist jedoch auch denkbar, dass die Grillvorrichtung 10 in einer alternativen Ausgestaltung mittels eines anderen, einem Fachmann als sinnvoll erscheinenden Wärmequellenelements, wie beispielsweise mittels eines Gases oder mittels einer Brennpaste, beheizbar und/oder befeuerbar ist. Die Grillvorrichtung 10 weist eine turmartige Ausgestaltung auf. Somit ist eine Vertikalerstreckung der Grillvorrichtung 10 um ein Vielfaches größer als eine Horizontalerstreckung der Grillvorrichtung 10. Insbesondere ist die Vertikalerstreckung der Grillvorrichtung 10 zumindest um ein 1,5-faches größer als die Horizontalerstreckung der Grillvorrichtung 10. Es ist jedoch auch denkbar, dass die Grillvorrichtung 10 in einer alternativen Ausgestaltung eine andere, einem Fachmann als sinnvoll erscheinende Ausgestaltung aufweist, wie beispielsweise eine Ausgestaltung, bei der die Vertikalerstreckung der Grillvorrichtung 10 um ein Vielfaches kleiner ist als eine Horizontalerstreckung der Grillvorrichtung 10.

Die Grillvorrichtung 10 zu einer Zubereitung von Grillgut 12 umfasst zumindest einen verschließbaren Garraum 14, zumindest eine zumindest teilweise im Garraum 14 anordenbare Wärmequelleneinheit 16 zu einer Wärmezufuhr und zumindest eine zumindest teilweise im Garraum 14 anordenbare Grillgutaufnahmeeinheit 18 zu einer Aufnahme von Grillgut 12. Zu einem Öffnen und/oder Schließen des Garraums 14 weist die Grillvorrichtung 10 zumindest ein beweglich gelagertes Garraumverschlusselement 42 auf. Das Garraumverschlusselement 42 ist schwenkbar gelagert. Hierbei ist das Garraumverschlusselement 42 schwenkbar an einem Garraumgrundkörperelement 58 der Grillvorrichtung 10 gelagert. Somit ist das Garraumverschlusselement 42 als Garraumtüre ausgebildet. Insgesamt weist die Grillvorrichtung 10 zwei Garraumverschlusselemente 42, 44 auf. Es ist jedoch auch denkbar, dass die Grillvorrichtung 10 eine von zwei abweichende Anzahl an Garraumverschlusselementen 42, 44 aufweist. Die Garraumverschlusselemente 42, 44 sind beide schwenkbar am Garraumgrundkörperelement 58 der Grillvorrichtung 10 gelagert. Somit sind beide Garraumverschlusselemente 42, 44 als Garraumtüren ausgebildet. Die Garraumverschlusselemente 42, 44 begrenzen zusammen mit dem Garraumgrundkörperelement 58 den Garraum 14, in dem das Grillgut 12 garbar ist.

Die Wärmequelleneinheit 16 umfasst zu einer Ermöglichung einer Wärmezufuhr zumindest ein Wärmequellenaufnahmeelement 46. Das Wärmequellenaufnahmeelement 46 ist hierbei dazu vorgesehen, zumindest das Wärmequellenelement (hier nicht näher dargestellt) aufzunehmen. Das Wärmequellenelement ist als Holz und/oder als Holzkohle ausgebildet. Somit ist das Wärmequellenaufnahmeelement 46 als Festkörperwärmequellenaufnahmeelement ausgebildet. Das Wärmequellenaufnahmeelement 46 ist zylinderförmig ausgebildet. Insbesondere ist das Wärmequellenaufnahmeelement 46 kreiszylinderförmig ausgebildet. Hierbei weist das Wärmequellenaufnahmeelement 46 einen Aufnahmeraum zu einer Aufnahme des Wärmequellenelements auf. Das Wärmequellenelement ist in einem Aufnahmeraum des Wärmequellenaufnahmeelements 46 anordenbar. Zudem ist das Wärmequellenaufnahmeelement 46 zum Großteil im Garraum 14 angeordnet.

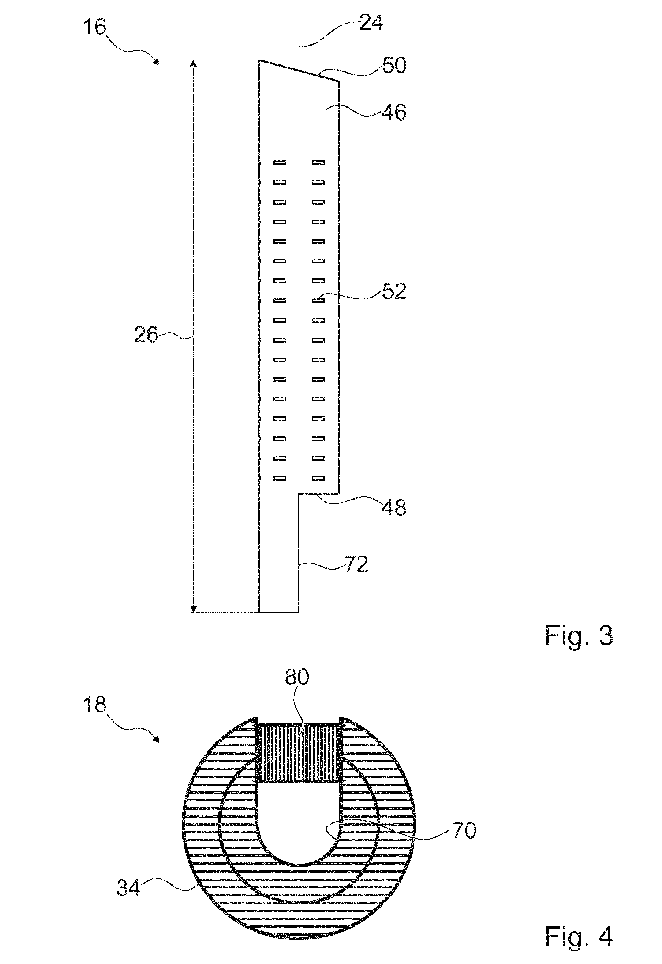

Ferner weist die Wärmequelleneinheit 16 zumindest ein Halteelement 48 auf (Figur 3 gestrichelt dargestellt), das dazu vorgesehen ist, zumindest das Wärmequellenelement zumindest vor einem Verbrennungsprozess und/oder während eines Verbrennungsprozesses in einer Position relativ zum Wärmequellenaufnahmeelement 46 zu halten. Das Halteelement 48 ist zudem dazu vorgesehen, ein Hindurchfallen des Wärmequellenelements durch das Wärmequellenaufnahmeelement 46 zu vermeiden. Hierzu ist das Halteelement 48 gitterförmig ausgebildet. Das Halteelement 48 ist als Gitterrost ausgebildet. Hierbei ist das Halteelement 48 auf einer einer Wärmequellenelementeinführöffnung 50 des Wärmequellenaufnahmeelements 46 abgewandten Seite des Wärmequellenaufnahmeelements 46 am Wärmequellenaufnahmeelement 46 angeordnet. Ferner ist das Halteelement 48 an einer den Aufnahmeraum des Wärmequellenaufnahmeelements 46 begrenzenden Innenseite des Wärmequellenaufnahmeelements 46 angeordnet. Das Halteelement 48 kann einteilig mit dem Wärmequellenaufnahmeelement 46 ausgebildet sein oder das Halteelement 48 ist mittels einer formschlüssigen und/oder kraftschlüssigen Verbindung am Wärmequellenaufnahmeelement 46 anordenbar und/oder befestigbar. Somit kann vorteilhaft ein Hindurchfallen des Wärmequellenelements durch das Wärmequellenaufnahmeelement 46 infolge eines Einführens des Wärmequellenelements durch die Wärmequellenelementeinführöffnung 50 in das Wärmequellenaufnahmeelement 46 vermieden werden.

Zudem umfasst das Wärmequellenaufnahmeelement 46 zumindest eine Wärmezufuhröffnung 52, durch die Wärme und/oder eine Flamme gezielt in den Garraum 14 einbringbar ist. Hierdurch ist das Grillgut 12 seitlich mit einer Wärme aus der Wärmequelleneinheit 16 beaufschlagbar. Die Wärmezufuhröffnung 52 ist entlang einer zumindest im Wesentlichen quer, insbesondere zumindest im Wesentlichen senkrecht, zu einer Vertikalachse 54 der Grillvorrichtung 10 verlaufenden Richtung ausgerichtet. Die Vertikalachse 54 der Grillvorrichtung 10 erstreckt sich vorzugsweise zumindest im Wesentlichen senkrecht zu einer Untergrundstandfläche 56 der Grillvorrichtung 10. Insgesamt weist das Wärmequellenaufnahmeelement 46 eine Vielzahl an Wärmezufuhröffnungen 52 auf. Die Wärmezufuhröffnungen 52 sind, betrachtet entlang einer in einer sich zumindest im Wesentlichen senkrecht zu einer Längsachse 24 der Wärmequelleneinheit 16 erstreckenden Ebene verlaufenden Umfangsrichtung, gleichmäßig um das Wärmequellenaufnahmeelement 46 verteilt. Zudem sind die Wärmezufuhröffnungen 52 entlang der Längsachse 24 der Wärmequelleneinheit 16 gleichmäßig über das Wärmequellenaufnahmeelement 46 verteilt. Es ist jedoch auch denkbar, dass die Wärmezufuhröffnungen 52 ungleichmäßig über das Wärmequellenaufnahmeelement 46 verteilt sind. Die Wärmezufuhröffnungen 52 können hierbei polygonal, kreisförmig usw. ausgebildet sein.

Die Grillgutaufnahmeeinheit 18 umgibt die Wärmequelleneinheit 16 zu einer zumindest seitlichen Wärmebeaufschlagung des an der Grillgutaufnahmeeinheit 18 anordenbaren Grillguts 12 durch die Wärmequelleneinheit 16 zumindest teilweise. Hierbei umgibt die Grillgutaufnahmeeinheit 18 das Wärmequellenaufnahmeelement 46 zumindest teilweise entlang der Umfangsrichtung. Somit umgibt die Grillgutaufnahmeeinheit 18 das Wärmequellenaufnahmeelement 46 derart, dass die Wärmezufuhröffnungen 52 zumindest teilweise seitlich neben dem auf der Grillgutaufnahmeeinheit 18 anordenbaren Grillgut 12 angeordnet sind. Die Grillgutaufnahmeeinheit 18 umfasst zumindest eine Wärmequelleneinheitsaufnahmeausnehmung 70 (Figur 4), in der das Wärmequellenaufnahmeelement 46 in einem im Garraum 14 angeordneten Zustand der Grillgutaufnahmeeinheit 18 angeordnet ist. Die Grillgutaufnahmeeinheit 18 und das Wärmequellenaufnahmeelement 46 sind somit getrennt voneinander ausgebildet, wobei die Grillgutaufnahmeeinheit 18 unabhängig vom Wärmequellenaufnahmeelement 46 aus dem Garraum 14 herausnehmbar im Garraum 14 anordenbar ist. Das Wärmequellenaufnahmeelement 46 erstreckt sich in einem im Garraum 14 angeordneten Zustand der Grillgutaufnahmeeinheit 18 ausgehend von der Grillgutaufnahmeeinheit 18 auf einer der Untergrundstandfläche 56 der Grillvorrichtung 10 abgewandten Seite der Grillgutaufnahmeeinheit 18 entlang einer zumindest im Wesentlichen parallel zur Vertikalachse 54 der Grillvorrichtung 10 verlaufenden Richtung 20 über die Grillgutaufnahmeeinheit 18 hinweg.

Ferner erstreckt sich die Wärmequelleneinheit 16 zumindest in einem an der Wärmequelleneinheit 16 und/oder im Garraum 14 angeordneten Zustand der Grillgutaufnahmeeinheit 18 entlang zumindest zwei entgegengesetzt gerichteten Richtungen 20, 22, die zumindest im Wesentlichen parallel zur Längsachse 24 der Wärmequelleneinheit 16 verlaufen, über die Grillgutaufnahmeeinheit 18 hinweg. Hierbei erstreckt sich insbesondere das Wärmequellenaufnahmeelement 46 zumindest in einem an der Wärmequelleneinheit 16 und/oder im Garraum 14 angeordneten Zustand der Grillgutaufnahmeeinheit 18 entlang zumindest zwei entgegengesetzt gerichteten Richtungen 20, 22, die zumindest im Wesentlichen parallel zur Längsachse 24 der Wärmequelleneinheit 16 verlaufen, über die Grillgutaufnahmeeinheit 18 hinweg.

Die Wärmequelleneinheit 16 weist hierbei eine maximale Längserstreckung 26 auf, die größer ist als 30 % einer maximalen Längserstreckung 28 des Garraums 14. Insbesondere weist das Wärmequellenaufnahmeelement 46 die maximale Längserstreckung 26 auf, die größer ist als 30 % der maximalen Längserstreckung 28 des Garraums 14. Die maximale Längserstreckung 26 des Wärmequellenaufnahmeelements 46 und die maximale Längserstreckung 28 des Garraums 14 erstrecken sich entlang einer zumindest im Wesentlichen senkrecht zur Untergrundstandfläche 56 der Grillvorrichtung 10 verlaufenden Richtung 20. Hierbei erstreckt sich das Wärmequellenaufnahmeelement 46 zum Großteil durch den Garraum 14. Somit erstreckt sich die Wärmequelleneinheit 16 zum Großteil durch den Garraum 14. Das Wärmequellenaufnahmeelement 46 erstreckt sich vollständig durch den Garraum 14. Somit erstreckt sich die Wärmequelleneinheit 16 vollständig durch den Garraum 14. Hierbei erstreckt sich das Wärmequellenaufnahmeelement 46 zumindest auf einer Seite des Garraums 14 über den Garraum 14 hinweg. Das Wärmequellenaufnahmeelement 46 erstreckt sich ausgehend von einer Grundfläche 60 des Garraumgrundkörperelements 58 in eine von der Grundfläche 60 abgewandte Richtung 20 durch den Garraum 14 hindurch und auf einer der Grundfläche 60 abgewandten Seite des Garraums 14 über den Garraum 14 hinweg.

Die Grundfläche 60 bildet zudem zumindest teilweise eine Grillgutausgarungsauffangfläche, die dazu vorgesehen ist, während eines Garprozesses entstehende Fett- und/oder Wasserausgarungen des Grillguts 12 aufzufangen. Es ist jedoch auch denkbar, dass die Grillvorrichtung 10 alternativ oder zusätzlich zur Grundfläche 60 zumindest ein Grillgutausgarungsauffangelement 62 (in Figur 2 gestrichelt dargestellt) aufweist, das dazu vorgesehen ist, während eines Garprozesses entstehende Fett- und/oder Wasserausgarungen des Grillguts 12 aufzufangen. Das Grillgutausgarungsauffangelement 62 ist als Fettauffangschale ausgebildet. Hierbei ist das Grillgutausgarungsauffangelement 62 im Garraum 14 anordenbar. Insbesondere ist das Grillgutausgarungsauffangelement 62 am Wärmequellenaufnahmeelement 46 anordenbar. Hierbei ist das Grillgutausgarungsauffangelement 62, betrachtet entlang der Vertikalachse 54 der Grillvorrichtung 10, zwischen zumindest einem Grillgutaufnahmeelement 34 der Grillgutaufnahmeeinheit 18 und der Grundfläche 60 des Garraumgrundkörperelements 58 im Garraum 14 anordenbar. Es ist jedoch auch denkbar, dass das Grillgutausgarungsauffangelement 62 außerhalb des Garraums 14 anordenbar ist, wobei die Grundfläche 60 des Garraumgrundkörperelements 58 zumindest eine Durchlassöffnung zu einem Durchlassen von Fett- und/oder Wasserausgarungen des Grillguts 12 aufweist.

Ferner umfasst die Grillvorrichtung 10 zumindest eine Lagereinheit 32 zu einer beweglichen Lagerung der Grillgutaufnahmeeinheit 18. Die Lagereinheit 32 ist hierbei als Reiblagereinheit ausgebildet. Es ist jedoch auch denkbar, dass die Lagereinheit 32 als Wälzlagereinheit ausgebildet ist. Zudem ist die Lagereinheit 32 am Garraumgrundkörperelement 58 angeordnet. Die Lagereinheit 32 kann hierbei einteilig mit dem Garraumgrundkörperelement 58 ausgebildet sein oder mittels einer formschlüssigen und/oder mittels einer kraftschlüssigen Verbindung am Garraumgrundkörperelement 58 befestigt sein. Die Lagereinheit 32 umfasst zumindest ein Lagerelement 66, das einteilig mit dem Garraumgrundkörperelement 58 ausgebildet ist. Das Lagerelement 66 weist eine kreisringförmige Ausgestaltung auf. Hierbei ist das Lagerelement 66 dazu vorgesehen, das Grillgutaufnahmeelement 34 der Grillgutaufnahmeeinheit 18 aufzunehmen. Das Lagerelement 66 bildet somit eine kreisringförmige Lagerfläche für das Grillgutaufnahmeelement 34. Das Grillgutaufnahmeelement 34 der Grillgutaufnahmeeinheit 18 ist in einem am Lagerelement 66 angeordneten Zustand drehbar gelagert. Somit ist die Grillgutaufnahmeeinheit 18 mittels der Lagereinheit 32 drehbar relativ zur Wärmequelleneinheit 16 lagerbar. Das Lagerelement 66 umgibt das Wärmequellenaufnahmeelement 46 entlang der Umfangsrichtung zumindest teilweise. Insbesondere umgibt das Lagerelement 66 das Wärmequellenaufnahmeelement 46 entlang der Umfangsrichtung vollständig.

Die Grillgutaufnahmeeinheit 18 weist zumindest das Grillgutaufnahmeelement 34 und zumindest ein weiteres Grillgutaufnahmeelement 36 auf, die übereinander an der Wärmequelleneinheit 16 anordenbar sind. Insbesondere sind das Grillgutaufnahmeelement 34 und das weitere Grillgutaufnahmeelement 36 übereinander am Wärmequellenaufnahmeelement 46 anordenbar. Die Lagereinheit 32 umfasst zu einer Lagerung des weiteren Grillgutaufnahmeelements 36 zumindest ein weiteres Lagerelement 68. Das weitere Lagerelement 68 ist ebenfalls einteilig mit dem Garraumgrundkörperelement 58 ausgebildet. Zudem ist das weitere Lagerelement 68 ebenfalls kreisringförmig ausgebildet. Somit umgibt das weitere Lagerelement 68 ebenfalls das Wärmequellenaufnahmeelement 46. Es ist jedoch auch denkbar, dass die Grillgutaufnahmeeinheit 18 eine von zwei abweichende Anzahl an Grillgutaufnahmeelementen 34, 36 aufweist, die übereinander im Garraum 14 anordenbar sind, und dass die Lagereinheit 32 eine von zwei abweichende Anzahl an Lagerelementen 66, 68 aufweist, an denen jeweils eines der Grillgutaufnahmeelemente 34, 36 anordenbar sind.

Das Grillgutaufnahmeelement 34 und das weitere Grillgutaufnahmeelement 36 sind jeweils als Grillrost ausgebildet. Zudem umfassen das Grillgutaufnahmeelement 34 und das weitere Grillgutaufnahmeelement 36 jeweils zumindest einen Grillgutaufnahmekorb 80 (Figur4). Der Grillgutaufnahmekorb 80 ist abnehmbar am jeweiligen Grillgutaufnahmeelement 34, 36 anordenbar. Hierbei ist der Grillgutaufnahmekorb 80 dazu vorgesehen, die Wärmequelleneinheitsaufnahmeausnehmung 70 in einem am jeweiligen Grillgutaufnahmeelement 34, 36 angeordneten Zustand zumindest an einer Seite zu verschließen. Somit kann eine ungewollte Entfernung oder ein Wegfallen des jeweiligen Grillgutaufnahmeelements 34, 36 vom Wärmequellenaufnahmeelement 46 vorteilhaft vermieden werden.

Des Weiteren umfasst die Grillvorrichtung 10 zumindest eine Brenngasabzugseinheit 30, die zumindest teilweise einteilig mit der Wärmequelleneinheit 16 ausgebildet ist. Die Brenngasabzugseinheit 30 ist als Kamin ausgebildet. Hierbei ist das Wärmequellenaufnahmeelement 46 einteilig mit einem Brenngasabzugselement der Brenngasabzugseinheit 30 ausgebildet oder das Wärmequellenaufnahmeelement 46 bildet zumindest teilweise das Brenngasabzugselement. Zu einer zumindest im Wesentlichen Vermeidung eines Flüssigkeitseintritts in das Brenngasabzugselement der Brenngasabzugseinheit 30 umfasst die Brenngasabzugseinheit 30 zumindest ein Kaminabschlusselement 64. Das Kaminabschlusselement 64 ist dazu vorgesehen, eine Abzugsöffnung der Brenngasabzugseinheit 30 zu überdecken. Das Kaminabschlusselement 64 ist hierbei mittels einer formschlüssigen und/oder mittels einer kraftschlüssigen Verbindung am Wärmequellenaufnahmeelement 46 anordenbar. Es ist jedoch auch denkbar, dass das Kaminabschlusselement 64 einteilig mit dem Wärmequellenaufnahmeelement 46 ausgebildet ist.

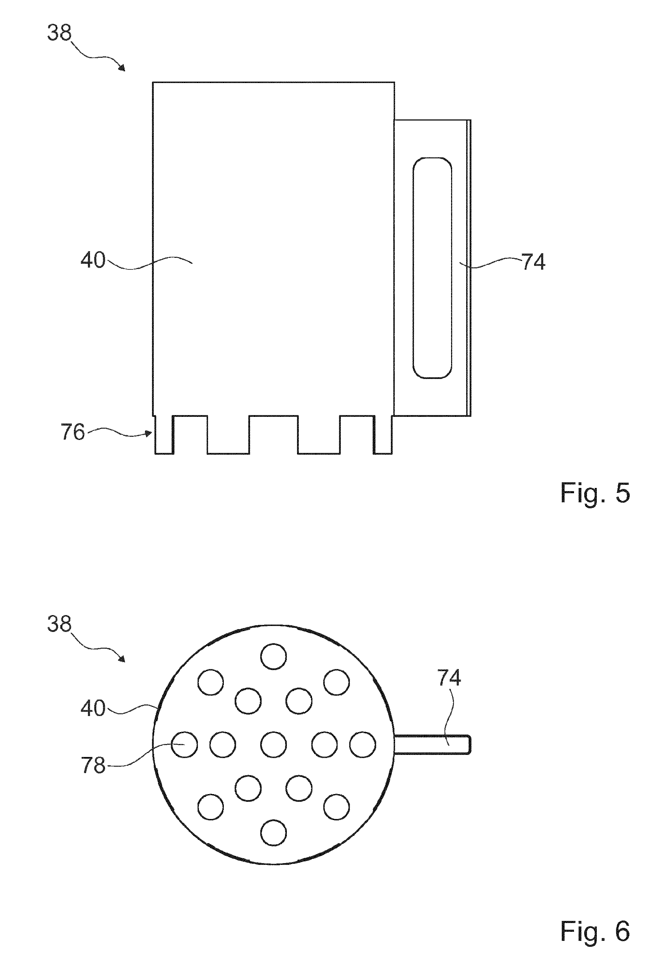

Ferner umfasst die Grillvorrichtung 10 zumindest eine Anheizeinheit 38 zu einem Anheizen und/oder Anzünden von zumindest einem in der Wärmequelleneinheit 16 anordenbaren Wärmequellenelement. Die Anheizeinheit 38 ist hierbei dazu vorgesehen, das im Wärmequellenaufnahmeelement 46 anordenbare Wärmequellenelement anzuheizen und/oder anzuzünden. Hierzu umfasst die Anheizeinheit 38 zumindest ein Anheizelement 40, das lösbar an der Wärmequelleneinheit 16 anordenbar ist. Das Anheizelement 40 ist lösbar am Wärmequellenaufnahmeelement 46 anordenbar. Hierzu umfasst das Wärmequellenaufnahmeelement 46 zumindest eine Anheizelementaufnahmeausnehmung 72, in der das Anheizelement 40 anordenbar ist. Hierbei weist das Anheizelement 40 eine zur Anheizelementaufnahmeausnehmung 72 korrespondierende Ausgestaltung auf, insbesondere eine zylinderförmige Ausgestaltung. Die Anheizelementaufnahmeausnehmung 72 ist auf einer der Wärmequellenelementeinführöffnung 50 abgewandten Seite des Wärmequellenaufnahmeelements 46 angeordnet. Hierbei ist die Anheizelementaufnahmeausnehmung 72 im Bereich des als Gitterrost ausgebildeten Halteelements 48 angeordnet. Das Anheizelement 40 ist tassenförmig ausgebildet (Figur 5). Somit umfasst das Anheizelement 40 zumindest einen Henkel 74. Der Henkel 74 ist dazu vorgesehen, von einem Grillvorrichtungsbediener gegriffen zu werden, um das Anheizelement 40 am Wärmequellenaufnahmeelement 46 anzuordnen oder aus der Anheizelementaufnahmeausnehmung 72 zu entnehmen. Zudem umfasst das Anheizelement 40 zumindest einen Abstandshaltebereich 76. Der Abstandshaltebereich 76 ist dazu vorgesehen, eine Abdeckung und/oder ein Verschließen zumindest einer Luftdurchführungsöffnung 78 des Anheizelements 40 in einem in der Anheizelementaufnahmeausnehmung 72 angeordneten Zustand zu vermeiden (Figur 6). Der Abstandshaltebereich 76 umfasst hierzu Fortsatzelemente, die entlang der Umfangsrichtung relativ zueinander beabstandet sind. Die Luftdurchführungsöffnung 78 ist hierbei in einer dem Abstandshaltebereich 76 zugewandten Bodenplatte des Anheizelements 40 angeordnet. Das Anheizelement 40 umfasst hierbei eine Vielzahl an Luftdurchführungsöffnung 78, die in der dem Abstandshaltebereich 76 zugewandten Bodenplatte des Anheizelements 40 angeordnet sind. Es ist hierbei auch denkbar, dass die Bodenplatte des Anheizelements 40 als Gitterrost ausgebildet ist. Das Anheizelement 40 ist ferner zumindest teilweise zu einem Auffangen von Wärmequellenelementrückstanden nach einem und/oder während einem Verbrennungsprozess des Wärmequellenelements vorgesehen.

Zu einer Zubereitung von Grillgut 12 mittels der Grillvorrichtung 10 ist das Wärmequellenaufnahmeelement 46 mit entzündbaren Wärmequellenelement, insbesondere Holz und/oder Holzkohle, befüllbar. Hierzu ist zumindest ein entzündbares Wärmequellenelement, insbesondere Holz und/oder Holzkohle, durch die Wärmequellenelementeinführöffnung 50 in das Wärmequellenaufnahmeelement 46 einfüllbar. Nach einem Einführen des Wärmequellenelements kommt das Wärmequellenelement auf dem Halteelement 48 zum Liegen. Ein Einfüllen von weiteren Wärmequellenelementen kann hierbei so oft wiederholt werden, bis das Wärmequellenaufnahmeelement 46 bis zur Wärmequellenelementeinführöffnung 50 mit Wärmequellenelementen gefüllt ist.

Anschließend ist das Anheizelement 40 mit einem entzündbaren Wärmequellenelement, insbesondere Holz und/oder Holzkohle, befüllbar. Nach einem Befüllen des Anheizelement 40 mit zumindest einem entzündbarem Wärmequellenelement, insbesondere Holz und/oder Holzkohle, ist das Wärmequellenelement mittels einer Feuerquelle entzündbar und/oder anzündbar. Die Feuerquelle kann hierbei Teil der Anheizeinheit 38 sein. Bei einer Ausgestaltung der Anheizeinheit 38 mit einer Feuerquelle, ist die Feuerquelle als Gasbrenner ausgebildet, der zu einem Entzünden und/oder zu einem Anzünden des im Anheizelement 40 angeordneten Wärmequellenelement am Anheizelement 40 anordenbar ist und anschließend wieder abnehmbar ist. Bei einer einer Ausgestaltung der Anheizeinheit 38 ohne eine Feuerquelle ist die Feuerquelle beispielsweise als Feuerzeug, als Streichholz usw. ausgebildet.

Nach einem Entflammen des im Anheizelement 40 angeordneten Wärmequellenelement ist das Anheizelement 40 in der Anheizelementaufnahmeausnehmung 72 anordenbar. Hierdurch sind das und/oder die im Wärmequellenaufnahmeelement 46 angeordnete/n Wärmequellenelement/e entzündbar und/oder anzündbar. Somit ist/sind die im Wärmequellenaufnahmeelement 46 angeordnete/n Wärmequellenelement/e zu einer Erzeugung von Wärme im Garraum 14 im Wärmequellenaufnahmeelement 46 verbrennbar. Das durch die Verbrennung entstehende Brenngas ist durch das Wärmequellenaufnahmeelement 46 und das Kaminabschlusselement 64 aus dem Garraum 14 herausführbar.

## Patentansprüche

1. Grillvorrichtung, insbesondere Holz- und/oder Holzkohlegrillvorrichtung, zu einer Zubereitung von Grillgut (12), mit zumindest einem verschließbaren Garraum (14), mit zumindest einer zumindest teilweise im Garraum (14) anordenbaren Wärmequelleneinheit (16) zu einer Wärmezufuhr und mit zumindest einer zumindest teilweise im Garraum (14) anordenbaren Grillgutaufnahmeeinheit (18) zu einer Aufnahme von Grillgut (12), **dadurch gekennzeichnet, dass** die Grillgutaufnahmeeinheit (18) die Wärmequelleneinheit (16) zu einer zumindest seitlichen Wärmebeaufschlagung des an der Grillgutaufnahmeeinheit (18) anordenbaren Grillguts (12) durch die Wärmequelleneinheit (16) zumindest teilweise umgibt.

2. Grillvorrichtung nach Anspruch 1, **dadurch gekennzeichnet, dass** sich die Wärmequelleneinheit (16) zumindest in einem an der Wärmequelleneinheit (16) angeordneten Zustand der Grillgutaufnahmeeinheit (18) entlang zumindest zwei entgegengesetzt gerichteten Richtungen (20, 22), die zumindest im Wesentlichen parallel zu einer Längsachse (24) der Wärmequelleneinheit (16) verlaufen, über die Grillgutaufnahmeeinheit (18) hinweg erstreckt.

3. Grillvorrichtung nach einem der vorhergehenden Ansprüche, **dadurch gekennzeichnet, dass** die Wärmequelleneinheit (16) eine maximale Längserstreckung (26) aufweist, die größer ist als 30 % einer maximalen Längserstreckung (28) des Garraums (14).

4. Grillvorrichtung nach einem der vorhergehenden Ansprüche, **dadurch gekennzeichnet, dass** sich die Wärmequelleneinheit (16) zum Großteil durch den Garraum (14) erstreckt.

5. Grillvorrichtung nach Anspruch 4, **dadurch gekennzeichnet, dass** sich die Wärmequelleneinheit (16) vollständig durch den Garraum (14) erstreckt.

6. Grillvorrichtung nach einem der vorhergehenden Ansprüche, **gekennzeichnet durch** zumindest eine Brenngasabzugseinheit (30), die zumindest teilweise einteilig mit der Wärmequelleneinheit (16) ausgebildet ist.

7. Grillvorrichtung nach einem der vorhergehenden Ansprüche, **gekennzeichnet durch** zumindest eine Lagereinheit (32) zu einer beweglichen Lagerung der Grillgutaufnahmeeinheit (18) relativ zur Wärmequelleneinheit (16).

8. Grillvorrichtung nach Anspruch 7, **dadurch gekennzeichnet, dass** die Grillgutaufnahmeeinheit (18) mittels der Lagereinheit (32) drehbar relativ zur Wärmequelleneinheit (16) lagerbar ist.

9. Grillvorrichtung nach einem der vorhergehenden Ansprüche, **dadurch gekennzeichnet, dass** die Grillgutaufnahmeeinheit (18) zumindest ein Grillgutaufnahmeelement (34) und zumindest ein weiteres Grillgutaufnahmeelement (36) aufweist, die übereinander an der Wärmequelleneinheit (16) anordenbar sind.

10. Grillvorrichtung nach einem der vorhergehenden Ansprüche, **gekennzeichnet durch** zumindest eine Anheizeinheit (38) zu einem Anheizen und/oder Anzünden von zumindest einem in der Wärmequelleneinheit (16) anordenbaren Wärmequellenelement.

11. Grillvorrichtung nach Anspruch 10, **dadurch gekennzeichnet, dass** die Anheizeinheit (38) zumindest ein Anheizelement (40) umfasst, das lösbar an der Wärmequelleneinheit (16) anordenbar ist.

12. Grillvorrichtung nach Anspruch 11, **dadurch gekennzeichnet, dass** das Anheizelement (40) zumindest teilweise zu einem Auffangen von Wärmequellenelementrückstanden vorgesehen ist.

13. Grillvorrichtung nach einem der vorhergehenden Ansprüche, **gekennzeichnet durch** zumindest ein beweglich gelagertes Garraumverschlusselement (42, 44) zu einem Öffnen und/oder Schließen des Garraums (14).

14. Grillvorrichtung nach Anspruch 13, **dadurch gekennzeichnet, dass** das Garraumverschlusselement (42, 44) schwenkbar gelagert ist.
